# EUROPEAN PATENT SPECIFICATION

(11) **EP 1 968 395 B1**
(45) Date of publication and mention of the grant of the patent: **14.07.2010**
(21) Application number: 06829783.7
(22) Date of filing: 18.12.2006
(51) Int. Cl.: A23J 3/04, A23J 3/08, A23J 3/14, A23L 1/24, A23D 7/015, A23D 7/005

(54) **FOOD PRODUCT AND A PROCESS FOR THE PREPARATION THEREOF**
NAHRUNGSMITTEL UND VERFAHREN ZU SEINER HERSTELLUNG
PRODUIT ALIMENTAIRE ET PROCÉDÉ D'ÉLABORATION DUDIT PRODUIT

(30) Priority: 21.12.2005 EP 05077967
(43) Date of publication of application: 17.09.2008
(73) Proprietor: Unilever N.V., 3013 AL Rotterdam (NL); Unilever PLC, London EC4Y 0DY (GB)
(72) Inventor: BIALEK, Jadwiga, Malgorzata, NL-3133 AT Vlaardingen (NL); GOLDING, Matthew, Duncan, 671 Sneydes Road - Werribee - Vic 3030 (AU); REGISMOND, Sudarshi, Tanuja, Angelique, NL-3133 AT Vlaardingen (NL)
(74) Representative: Rosen Jacobson, Frans Lucas M.
(86) International application number: PCT/EP2006/012326
(87) International publication number: WO 2007/071403

(56) References cited:
- EP-A- 1 129 626
- EP-A- 1 281 322
- EP-A- 1 627 570
- WO-A-93/07761
- US-A- 4 985 270
- US-A- 5 322 702

## Description

The present invention relates to a novel protein aggregate, food products comprising this novel protein aggregate and a process to produce the same.

### Background of the invention

Full fat mayonnaise typically comprises 80 wt% oil and to meet the need of consumers for products with less calories, mayonnaise like products have been proposed with less oil. These so-called "reduced oil mayonnaise" generally comprise less than 80 wt% oil. However, the decreased level of oil influences the structure of the resultant product negatively. To solve this problem different stabilisers have been proposed. Stabilisers include modified starch and gums like xanthan or guar gum. However, consumers increasingly avoid products with "artificial" additives like stabilisers. In addition the use of such stabilisers often leads to gel like appearance which is less attractive.

Heat denatured protein particles have been described previously in US 5 322 702, EP 1 281 322, EP 1 129 626, WO 93/07761, DD 150539. Heat denatured protein particles are less desirable as emulsions prepared with heat denatured protein particles tend to have a slightly gritty mouth feel and a dull appearance.

US 5 393 550 discloses the use of non denatured proteinacious particles. However, the disadvantage is that to prepare these non denatured proteinacious particles solvents are used which need to be removed carefully.

Therefore there is a need for alternative processes and stabilisers to prepare stable spoonable mayonnaise like products with decreased amounts of oil that have a smooth mouth feel and glossy appearance.

### Summary of the invention

Surprisingly we have now found that protein aggregates prepared according to claim 1 can be used as stabilisers to stabilise food emulsions. One of the advantages is that it obviates or at least reduces the need to use stabilisers like modified starch and gums like xanthan, gellan or guar gum. In addition, the food products comprising the inventive protein aggregates have an improved appearance. In addition to reduced oil mayonnaise, unexpectedly the inventive protein aggregates can be used in other food products and edible emulsions. Furthermore, another advantage of the present invention is that it provides a method for producing mayonnaise like products that still can be labelled as mayonnaise. The use of additives like artificial stabilisers may not be allowed in products labelled as "mayonnaise" by national regulations.

### Detailed description of the invention

### Definitions

In respect to the use of the term "aggregate" the term is defined herein as describing a multitude of substantially spheroidal protein particles whereby the particles are contacting each other when viewing a 5 wt% solution of said aggregate in water (by dry weight of the protein) using scanning electron microscopy or confocal microscopy. It is understood that said protein particles themselves may comprise of a number of proteins.

In respect to the use of the term "hydrated state," the term is defined herein as being substantially completely saturated with an aqueous solution.

In respect to the use of the term "denatured," the term is defined herein as a change in the three-dimensional conformation, or structure, of a protein from a more ordered state to a less ordered state. In respect to the use of the term "undenatured," the term is defined herein as having a conformation that is substantially unchanged from that of the protein in its native state. The conformation can be confirmed with for example differential scanning calorimetry.

In respect to the use of the term "substantially spheroidal in shape," the term is defined herein as encompassing the spectrum of spheroidal shapes, including spheres, and oblate or prolate spheroids. Compositions wherein spheres are the exclusive or predominant species are most preferred. However, the presence of other spheroidal shapes in compositions of the present invention are acceptable, but compositions wherein such other spheroidal shapes predominate or are the exclusive species are less preferred. The presence of rodiform and filamentous particles, while tolerable, is less preferred. Spicular particles are not preferred.

In respect to the use of the term "solution," the term is defined herein as an aqueous medium that wherein protein is dissolved and/or suspended.

Without wishing to be bound by theory, applicants believe that by preparing the protein particles without a heating step, the resultant protein particles have surface which enables contact between the particles as can been seen when viewing a 5 wt% solution thereof using scanning electron microscopy or confocal microscopy. Applicants believe that the resultant protein particles form networks that help to stabilise the structure. For example, in an edible food emulsion like mayonnaise the protein aggregate seems to form a network structure that stabilises droplets of oil in the water phase. In contrast, heat denatured particles tend to remain discrete particles that do not contact each other to form aggregates:

An unexpected advantage of the inventive process to prepare the protein aggregate is that it enables the person skilled in the art to adapt the stabilising effect of the particles and protein aggregate to the specific food compositions by routine experimentation. For example, by changing the pH, salt concentration, if used, amount of shear, type of protein, combination of proteins.

The protein aggregate according to the present invention may be produced from a variety of protein materials. The preferred protein for a particular use may vary according to considerations of availability, expense, and flavor associated with the protein. Additionally, the degree and nature of impurities and other components in the protein source may be considered. Suitable protein sources include plant, dairy, and other animal protein sources. Representative of suitable proteins derived from suitable protein sources is the group consisting of: whey proteins, such as beta-lactoglobulins and alfa-lactalbumins; bovine serum albumins; egg white and egg yolk proteins, such as ovalbumins; and, soy proteins, such as glycinin and conglycinin. Combinations of suitable proteins are also acceptable for use in the present invention. Especially preferred is a combination of egg white and egg yolk proteins. The proteins may be used as fresh preparations or as powders. For example, in addition to liquid egg white and egg yolk protein preparations powdered preparations are also commercially available.

It is recognised that protein sources suitable for use in the present invention may contain various impurities and by-products. For example, whey protein concentrates can comprise as much as 40% lactose. The presence of such materials does not substantially affect the process herein. If desired, lactose-free products can be prepared by using conventional extraction procedures.

The inventive protein aggregate may be prepared by a process as described below. Preferably, the pH of an aqueous protein solution of one or more undenatured proteins is decreased to a pH of 5.0 or less, preferably a pH of 4.5 or less, more preferably a pH of 4.0 or less and most preferably a pH of 3.6 or less, but preferably not below a pH of 2, more preferably not below a pH of 2.5, most preferably not below a pH of 3.0. Preferably, the pH is decreased to a pH below the iso-electric point of the protein, more preferably to a pH 0.3 lower than the iso-electric point of the protein. If more than one protein is present, the pH is preferably decreased below the highest iso-electric point of the proteins present such that at least 60 wt% of all proteins present precipitate based on the dry weight of the proteins. Any edible acid may be used such as acetic acid. Although the term "solution" is used, it is recognised that some proteins or mixtures thereof may not be completely soluble. The protein solution to be acidified is preferably substantially free of denatured proteins. Substantially free is this respect means that the protein solution prior to acidification comprises less than 10 wt% of denatured proteins, more preferably less than 5 wt % of denatured proteins; even more preferably less than 1 wt% of denatured proteins, even more preferably less than 0.1 wt% of denatured proteins, and most preferably completely free of denatured proteins, all wt % by dry weight of the total amount of proteins in the protein solution:

The protein concentration (based on dry weight of the protein) in the solution is preferably less than 70 wt%, more preferably less than 50 wt% and most preferably less than 30 wt% and preferably more than 1 wt%, more preferably more than 3 wt% and most preferably more than 5 wt% by weight of the total protein solution.

In some cases it may be advantageous to use a protein solution which is free of sugar, preferably selected from saccharose, lactose, glucose trehalose and combinations thereof. Free of sugar is meant to describe a concentration of less than 5 wt%, preferably less than 1 wt% and most preferably less than 0.1 wt% of sugar by weight of the total protein solution. Optionally an electrolyte may be added to the protein solution, preferably less than 10 wt%, more preferably less than 7 wt% and most preferably less than 5 wt% and preferably more than 0.01 wt%, more preferably more than 0.1 wt% and most preferably more than 0.5 wt% by weight of the total protein solution. Any electrolyte of food grade may be used. A preferred electrolyte is selected from sodium chloride, calcium chloride and mixtures thereof. In a particularly preferred embodiment, electrolyte is added before the acidification step. This generally leads to an even better stability of the emulsion, presumably because the electrolyte interacts with the undenatured protein.

The inventive process also comprises a step of shearing the protein solution. A sufficient amount of shear is usually a combination of time and shear rate such that the protein particles diameter is as described above and the protein particles form the inventive protein aggregates. The shear is preferably equivalent to a shear of preferably at least 1000 rpm, more preferably at least 2000 rpm, most preferably at least 3000 rpm and preferably at most 25 000 rpm, more preferably at most 15 000 rpm and most preferably at most 10 000 rpm, of a Silverson L4RT-A overhead mixer, using the Square Hole High Shear Screen with 2 mm holes (Silverson), 500 gram protein solution in a 1 L beaker.

It is critical that the steps above are carried out at a temperature of less than 70 degrees C, preferably less than 60 degrees C, more preferably less than 40 degrees C, most preferably less than 30 degrees C. Optionally, the sheared protein solution may be dried by any means known in the art to form a protein aggregate powder including spray drying.

According to another aspect of the invention a protein aggregate obtainable by the process as described herein is provided. Said protein aggregate comprises of a multitude of denatured protein particles and at least 50 % of the number of said protein particles have in a hydrated state a diameter (long axes in the case of non-spheres) of more than 3 micron, preferably more than 5 micron, more preferably more than 7 micron and preferably a diameter of less than 35 micron, more preferably less than 30 micron most preferably less than 25 micron and preferably less than 10 % of the number of said protein particles have in a hydrated state a diameter of more than 300 micron and preferably a diameter of more than 200 micron, more preferably more than 50 micron.

The diameters are preferably measured from micrographs using scanning electron microscopy or confocal laser scanning microscopy. Alternatively D(3,2) mean diameter may be measured using a Malvern Mastersizer. The diameter of the protein particles in emulsions may be determined by centrifuging the emulsion to isolate the protein particles. When protein particles may be located in the oil-water interface of the emulsion, the emulsion may be treated with an surface active emulsifier like such as SDS or polysorbate (x0) in order to remove the particles from the interface. When D(3,2) mean diameters are used then at least 50 % of the number of said protein particles have in a hydrated state a diameter of more than 3 micron, preferably more than 5 micron, more preferably more than 7 micron and preferably a diameter of less than 35 micron, more preferably less than 30 micron most preferably less than 25 micron and preferably less than 10 % of the number of said protein particles have in a hydrated state a diameter of more than 300 micron and preferably a diameter of more than 200 micron, more preferably more than 50 micron.

The inventive protein aggregate may be used in any suitable food product in amounts of at least 0.1 wt%, preferably at least 2 wt%, more preferably at least 5 wt% and preferably at most 50 wt%, more preferably at most 25 wt%, most preferably at most 10 wt% by weight of the food product.

In one particularly preferred embodiment, the food product is an edible food emulsion further comprising
a) at least 0.1 wt%, preferably at least 2 wt%, more preferably at least 20 wt% and at most 70 wt%, preferably at most 60 wt%, most preferably at most 50 wt% of an oil phase;
b) at least 0.1 wt%, preferably at least 2 wt%, more preferably at least 20 wt% and preferably at most 99 wt%, more preferably at most 90 wt%, most preferably at most 80 wt% of an aqueous phase; and
c) optionally at least 0.1 wt%, preferably at least 2 wt%, more preferably at least 5 wt% and preferably at most 50 wt%, more preferably at most 25 wt%, most preferably at most 10 wt% of a flavouring agent, all by weight of the food product.

Unexpectedly, a food product comprising the protein aggregate has the preferred structure and improved appearance for a mayonnaise: a stable spoonable emulsion with a glossy appearance and smooth texture.

Any flavouring agent known in the art for food product may be used. This includes sucrose, mustard, herbs, spices, lemon and mixtures thereof. Optionally other food additives may be used such EDTA.

When the food product is an edible emulsion it may be any emulsion including an oil in water emulsion (O/W), a water in oil emulsion (W/O) duplex emulsions (W/O/W or O/W/O). One preferred emulsions is an oil in water emulsion (O/W).

An especially preferred food product according an aspect of the invention is an edible emulsion comprising the inventive protein aggregate whereby the protein aggregate is located in the oil water interface of the emulsion. Another preferred food product according to an aspect of the present invention is an edible emulsion comprising the inventive protein aggregate whereby said protein aggregate at least partly encapsulates at least 50 % of the number of droplets in the emulsion. The location of the protein aggregate can be easily seen using confocal microscopy of scanning electron microscopy.

The food product according to the invention is preferably substantially free of artificial stabilisers selected from gums, modified and unmodified starches. Gums include gellan, xanthan, galactomannan (e.g. guar gum and locust bean gum), alginate, carrageenan, konjac mannan, microcrystalline cellulose, gelatin, agar, gum arabic, curdlan, chitosan and mixtures thereof. Substantially free in this respect means less than 5 wt%, preferably less than 3 wt%, more preferably less than 0.1 wt% and most preferably less than 0.01 wt%.

In addition to the protein aggregate according to the invention, a food product may further comprise one or more undenatured proteins. If one or more undenatured proteins are used, the one or more undenatured proteins may be the same or different from the protein(s) present in the protein aggregate. The one or more undenatured protein may be selected from the group as described above for the protein aggregate.

According to yet another aspect of the invention a process is provided to prepare an edible food emulsion comprising the steps of
a) Contacting the protein aggregate with the aqueous phase;
b) Optionally adding one or more undenatured proteins;
c) Emulsifying the oil phase, the aqueous phase and the protein aggregate to form an emulsion;
d) Optionally, homogenising the obtained emulsion; and
e) Optionally, flavouring agents may be added after of any one the previous steps using amounts of the various ingredients as described above.

When the emulsion is homogenised any means known to the person skilled in the art may be used. Preferred means include colloid mills (eg. ex Ross) or inline homogenisers (eg. ex. Maelstrom IPM).

According to yet another aspect of the invention a process is provided to stabilise a food product comprising adding a protein aggregate according to any aspect of the invention to a food product.

Especially preferred edible emulsion include mayonnaise, mayonnaise like products, salad dressings and savoury sauces.

When the food product is a savoury sauce it is preferably an edible emulsion comprising in addition to the inventive protein aggregate
a) at least 0 wt%, preferably at least 0.1 wt%, more preferably at least 1 wt% and at most 30 wt%, preferably at most 25 wt%, most preferably at most 20 wt% of an oil phase;
b) at least 0.1 wt%, preferably at least 2 wt%, more preferably at least 20 wt% and preferably at most 99 wt%, more preferably at most 90 wt%, most preferably at most 80 wt% of an aqueous phase; and
d) at least 0.1 wt% of NaCl
c) optionally at least 0.1 wt%, preferably at least 2 wt%, more preferably at least 5 wt% and preferably at most 50 wt%, more preferably at most 25 wt%, most preferably at most 10 wt% of a flavouring agent, all by weight of the food product.

Savoury sauces may include vegetable material like mushrooms, onion, leeks. Savoury sauces are typically sold as ready to use sauces that only need to be warmed up for consumption. Examples include mushroom cream sauce, cheese sauce, lemon butter sauce, onion sauce, gypsy sauce, sauce béarnaise, sauce hollandaise, curry sauce.

A preferred savoury sauce according to one aspect of the invention is substantially free of gums. Gums include gellan, xanthan, galactomannan (e.g. guar gum and locust bean gum), alginate, carrageenan, konjac mannan, microcrystalline cellulose, gelatin, agar, gum arabic, curdlan, chitosan and mixtures thereof. Substantially free in this respect means less than 5 wt%, preferably less than 3 wt%, more preferably less than 0.1 wt% and most preferably less than 0.01 wt%.

After inclusion of the inventive protein aggregate in the food product, it may be preferred to carry out a heat treatment to increase the shelf life. Any heat treatment known in the art may be used such as pasteurisation, sterilisation, ultra high pressure and combinations thereof.

Other than in the examples, or where otherwise indicated, all numbers expressing quantities of ingredients or reaction conditions used herein are to be understood as modified in all instances by the term "about". Similarly, all percentages are weight/weight percentages unless otherwise indicated. The protein concentration are based on dry weight of the protein unless indicated otherwise. Where the term "comprising" is used in the specification or claims, it is not intended to exclude any terms, steps or features not specifically recited. When different ranges are specified, all sub ranges subsumed therein are also included.

To illustrate the invention, the following examples are given below.

### Examples

### Examples 1 to 7. Preparation of protein aggregates:

Seven examples of protein aggregates were prepared as outlined below using different weight ratios of egg yolk (EY) and egg white (EW). 500g of a liquid native egg protein preparation was acidified using glacial acetic acid until a pH of 3.5 was reached. Mixtures were stirred constantly but gently until the desired constant pH is reached. 1 wt% of salt was added and the protein solution was sheared in a 1 L beaker with an Silverson L4RT-A overhead mixer, using the Square Hole High Shear Screen with 2 mm holes (ex Silverson) for 3 minutes at 3000rpm to form protein aggregates. The protein aggregate was stored in plastic tub at 5 degrees C until further use. When viewing a 5 wt% solution of said aggregate in water using scanning electron microscopy or confocal microscopy it could be seen that the particles were contacting each other and seemed to form networks.

| Example | Weight ratio egg white (EW) to egg yolk (EW) | wt% dry protein | Final pH | Acid Added (gram) | NaCl (wt %) |
|---|---|---|---|---|---|
| 1 | 100EW | 10 | 3.5 | 55.1 | 1 |
| 2 | 20EY/80EW | 11.3* | 3.5 | 53.5 | 1 |
| 3 | 40EY/60EW | 12.6* | 3.5 | 47.7 | 1 |
| 4 | 50EY/50EW | 13.25* | 3.5 | 45.3 | 1 |
| 5 | 60EY/40EW | 13.9* | 3.5 | 40.3 | 1 |
| 6 | 80EY/20EW | 15.2* | 3.5 | 40.9 | 1 |
| 7 | 100EY | 16.5 | 3.5 | 39.5 | 1 |

| | | | | | |
|---|---|---|---|---|---|
| Acid used= glacial acetic acid % dry protein for mixtures of yolk and white were calculated based on an average protein concentration in egg white of 10% and in egg yolk of 16.5%, respectively. | | | | | |

### Examples 8 to 13 Preparation of reduced oil mayonnaise containing protein aggregates

Oil-in-water emulsions containing 65% oil were prepared using protein aggregates according to the invention prepared from egg white, egg yolk or combinations of the two as listed in the table below. As comparative examples (denoted in the table below with an *) edible emulsions were prepared using heat treated protein particles and native untreated proteins.

The edible emulsions described in the table below were prepared by dispersing salt, sucrose, lemon juice concentrate materials and protein materials in water, adding the oil and mixing under medium shear to prepare the emulsion. The pH was checked and, if needed the appropriate level of acid (vinegar) was added at this stage to obtain a pH of 3.5. The emulsion was then homogenised using a colloid mill (ex Ross) or alternatively using an incline homogenisers (ex. Maelstrom IPM). The 65% oil containing mayonnaise obtained after homogenisation was filled into jars and stored at ambient temperature.

| **Ingredient (wt%)** | **Exm. 8** | **Exm. 9*** | **Exm. 10** | **Exm. 11*** | **Exm. 12** | **Exm. 13*** |
|---|---|---|---|---|---|---|
| Undenatured egg yolk (liquid) | - | - | - | 4.27 | - | 4.27 |
| Undenatured egg white (liquid) | 4.27 | - | - | 3.08 | - | - |
| Egg yolk protein aggregate | - | - | - | - | 4.27 | - |
| Egg white protein aggregate | 3.08 | | - | - | 3.08 | |
| Protein aggregate (Egg white : Egg yolk weight ratio 50/50) | - | - | 7.35 | - | - | - |
| Heat denatured egg white protein particles | - | 8.4 | - | - | - | 3.08 |
| Salt | 1.09 | 1.09 | 1.09 | 1.09 | 1.09 | 1.09 |
| Sucrose | 1.25 | 1.25 | 1.25 | 1.25 | 1.25 | 1.25 |
| Lemon juice conc. | 0.058 | 0.058 | 0.058 | 0.058 | 0.058 | 0.058 |
| EDTA | 0.0077 | 0.0077 | 0.0077 | 0.0077 | 0.0077 | 0.0077 |
| Oil | 65 | 65 | 65 | 65 | 65 | 65 |
| Vinegar | To pH 3.5 | To pH 3.5 | To pH 3.5 | To pH 3.5 | To pH 3.5 | To pH 3.5 |
| Water | Balance to 100 | Balance to 100 | Balance to 100 | Balance to 100 | Balance to 100 | Balance to 100 |

*Undenatured egg yolk and egg white (liquid) refers to untreated native liquid egg yolk and egg white respectively. The egg protein aggregates used were prepared according to example 7 (yolk) example 1 (egg white) and example 4 (the 50:50mixture of egg white : egg yolk) respectively. To prepare the heat denatured protein particles 500g of egg white was acidified using glacial acetic acid until a pH of 3.5 was reached. Mixtures were stirred constantly but gently until the desired constant pH is reached. 1 wt% of salt was added and the protein solution was sheared in a 1L beaker with a Silverson L4RT-A overhead mixer, using the Square Hole High Shear Screen with 2 mm holes (ex Silverson) for 3 minutes at 3000rpm. The protein solution was then heated at 70 degrees C for 20min at a shear rate of 300rpm. The heat treated protein particle solution was stored in a plastic tub at 5 degrees C until further use*.

### Results

The emulsion prepared using heat denatured protein particles (example 9) did not have the required smooth texture. Example 9 showed a slightly course mouth feel and had a dull appearance. Replacing part of the heat denatured particles by native untreated liquid egg yolk (example 13) or all of the heat denatured particles by a mixture of native untreated native liquid yolk and egg white (example 11) resulted in unstable emulsions which were not spoonable but pourable. Replacing heat denatured protein particles by protein aggregates of egg white according to the invention (example 8) or protein aggregates of a mixture of egg yolk and egg white (examples 10,12) resulted in stable spoonable emulsions with a glossy appearance. The emulsion according to example 10 scored the best in terms of stability, structure and appearance.

## Claims

1. A process to prepare a protein aggregate comprising the steps of
a) decreasing the pH of an aqueous protein solution of one or more undenatured proteins to a pH of 5.0 or less, preferably a pH of 4.5 or less, more preferably a pH of 4.0 or less and most preferably a pH of 3.6 or less.;
b) optionally adding more than 0.01 wt% of an electrolyte;
c) shearing said solution,
whereby steps a to c are carried out at a temperature of less than 70 degrees C, preferably less than 60 degrees C, more preferably less than 40 degrees C, most preferably less than 30 degrees C;
d) optionally, drying the sheared protein solution to form a protein aggregate powder.

2. A protein aggregate obtainable by a process according to claim 1 said protein aggregate comprising of a multitude of denatured protein particles and at least 50 % of the number of said protein particles have in a hydrated state a diameter of more than 3 micron, preferably more than 5 micron, more preferably more than 7 micron and preferably a diameter of less than 35 micron, more preferably less than 30 micron most preferably less than 25 micron and
preferably less than 10 % of the number of said protein particles have in a hydrated state a diameter of more than 300 micron and preferably a diameter of more than 200 micron, more preferably more than 50 micron.

3. A protein aggregate according to claim 2 whereby the protein aggregate comprises more than one protein.

4. A protein aggregate according to claim 2 or claim 3 whereby the protein aggregate comprises egg white protein, egg yolk protein or a combination thereof.

5. A food product comprising at least 0.1 wt%, preferably at least 2 wt%, more preferably at least 5 wt% and preferably at most 50 wt%, more preferably at most 25 wt%, most preferably at most 10 wt% of a protein aggregate according to any one of preceding claims by weight of the food product.

6. A food product according to claim 5 whereby the food product is an edible food emulsion further comprising
a) at least 0.1 wt%, preferably at least 2 wt%, more preferably at least 20 wt% and at most 70 wt%, preferably at most 60 wt%, most preferably at most 50 wt% of an oil phase;
b) at least 0.1 wt%, preferably at least 2 wt%, more preferably at least 20 wt% and preferably at most 99 wt%, more preferably at most 90 wt%, most preferably at most 80 wt% of an aqueous phase; and
c) optionally at least 0.1 wt%, preferably at least 2 wt%, more preferably at least 5 wt% and preferably at most 50 wt%, more preferably at most 25 wt%, most preferably at most 10 wt% of a flavouring agent by weight of the food product.

7. A food product according to claim 5 wherein the food product is a savoury sauce further comprising
a) at least 0 wt%, preferably at least 0.1 wt%, more preferably at least 1 wt% and at most 30 wt%, preferably at most 25 wt%, most preferably at most 20 wt% of an oil phase;
b) at least 0.1 wt%, preferably at least 2 wt%, more preferably at least 20 wt% and preferably at most 99 wt%, more preferably at most 90 wt%, most preferably at most 80 wt% of an aqueous phase; and
c) at least 0.1 wt% of NaCl
d) optionally at least 0.1 wt%, preferably at least 2 wt%, more preferably at least 5 wt% and preferably at most 50 wt%, more preferably at most 25 wt%, most preferably at most 10 wt% of a flavouring agent, all by weight of the food product.

8. A food product according to claims 6 or 7whereby the protein aggregate is located in the oil water interface of the emulsion.

9. A food product according to claim 7 or 8 whereby said protein aggregate at least partly encapsulates at least 50 % of the number of droplets in the emulsion.

10. A food product according to any one of the preceding claims 5 to 9 wherein the food product is substantially free of gums.

11. A process to prepare food product according to any one of the preceding claims comprising the steps of
a) Contacting the protein aggregate with the aqueous phase;
b) Optionally adding one or more undenatured proteins;
c) Emulsifying the oil phase, the aqueous phase and the protein aggregate of form an emulsion;
d) Optionally, homogenising the obtained emulsion; and
e) Optionally, adding flavouring agents after of any the previous steps; and.
f) Optionally, heating the food product preferably using pasteurisation, sterilisation, ultra high pressure or a combination thereof.

12. A process to stabilise a food product comprising adding a protein aggregate according to any one of the previous claims to a food product.

## Patentansprüche

1. Verfahren zur Herstellung eines Proteinaggregats, umfassend die Schritte:
a) Senken des pH einer wässrigen Proteinlösung von einem oder mehreren undenaturierten Protein(en) auf pH 5,0 oder niedriger, vorzugsweise auf einen pH von 4,5 oder niedriger, bevorzugter einen pH von 4,0 oder niedriger und am bevorzugtesten einen pH von 3,6 oder niedriger;
b) gegebenenfalls Zusetzen von mehr als 0,01 Gewichts-% eines Elektrolyten;
c) Scherbehandlung der Lösung,
wobei die Schritte a) bis c) bei einer Temperatur von niedriger als 70 Grad C, vorzugsweise niedriger als 60 Grad C, bevorzugter niedriger als 40 Grad C, am bevorzugtesten niedriger als 30 Grad C durchgeführt werden;
d) gegebenenfalls Trocknen der scherbehandelten Proteinlösung unter Bildung eines Proteinaggregatpulvers.

2. Proteinaggregat, erhältlich durch ein Verfahren nach Anspruch 1, wobei das Proteinaggregat eine Vielzahl von denaturierten Proteinpartikeln umfasst und wobei wenigstens 50 % der Zahl der Proteinpartikel in einem hydratisierten Zustand einen Durchmesser von mehr als 3 Mikrometer, vorzugsweise mehr als 5 Mikrometer, bevorzugter mehr als 7 Mikrometer und vorzugsweise einen Durchmesser von weniger als 35 Mikrometer, bevorzugter weniger als 30 Mikrometer, am bevorzugtesten weniger als 25 Mikrometer haben,
und wobei vorzugsweise weniger als 10 % der Zahl der Proteinpartikel in einem hydratisierten Zustand einen Durchmesser von mehr als 30 Mikrometer und vorzugsweise einen Durchmesser von mehr als 200 Mikrometer, bevorzugter von mehr als 50 Mikrometer haben.

3. Proteinaggregat nach Anspruch 2, wobei das Proteinaggregat mehr als ein Protein umfasst.

4. Proteinaggregat nach Anspruch 2 oder Anspruch 3, wobei das Proteinaggregat Eiweißprotein, Eigelbprotein oder eine Kombination davon umfasst.

5. Nahrungsmittelprodukt, umfassend wenigstens 0,01 Gewichts-%, vorzugsweise wenigstens 2 Gewichts-%, bevorzugter wenigstens 5 Gewichts-% und vorzugsweise höchstens 50 Gewichts-%, bevorzugter höchstens 25 Gewichts-%, am bevorzugtesten höchstens 10 Gewichts-% eines Proteinaggregats nach einem der vorangehenden Ansprüche, bezogen auf das Nahrungsmittelprodukt.

6. Nahrungsmittelprodukt nach Anspruch 5, wobei das Nahrungsmittelprodukt eine essbare Nahrungsmittelemulsion ist, die außerdem umfasst:
a) wenigstens 0,1 Gewichts-%, vorzugsweise wenigstens 2 Gewichts-%, bevorzugter wenigstens 20 Gewichts-% und höchstens 70 Gewichts-%, vorzugsweise höchstens 60 Gewichts-%, am bevorzugtesten 50 Gewichts-% einer Ölphase;
b) wenigstens 0,1 Gewichts-%, vorzugsweise wenigstens 2 Gewichts-%, bevorzugter wenigstens 20 Gewichts-% und vorzugsweise höchstens 99 Gewichts-%, bevorzugter höchstens 90 Gewichts-%, am bevorzugtesten höchstens 80 Gewichts-% einer wässrigen Phase und
c) gegebenenfalls wenigstens 0,1 Gewichts-%, vorzugsweise wenigstens 2 Gewichts-%, bevorzugter wenigstens 5 Gewichts-% und vorzugsweise höchstens 50 Gewichts-%, bevorzugter höchstens 25 Gewichts-%, am bevorzugtesten höchstens 10 Gewichts-% eines Aromatisierungsmittels, bezogen auf das Gewicht des Nahrungsmittelprodukts.

7. Nahrungsmittelprodukt nach Anspruch 5, wobei das Nahrungsmittelprodukt Würzsoße (savoury sauce) ist, die außerdem umfasst:
a) wenigstens 0 Gewichts-%, vorzugsweise wenigstens 0,1 Gewichts-%, bevorzugter wenigstens 1 Gewichts-% und höchstens 30 Gewichts-%, vorzugsweise höchstens 25 Gewichts-%, am bevorzugtesten höchstens 20 Gewichts-% einer Ölphase;
b) wenigstens 0,1 Gewichts-%, vorzugsweise wenigstens 2 Gewichts-%, bevorzugter wenigstens 20 Gewichts-% und vorzugsweise höchstens 99 Gewichts-%, bevorzugter höchstens 90 Gewichts-%, am bevorzugtesten höchstens 80 Gewichts-% einer wässrigen Phase und
c) wenigstens 0,1 Gewichts-% NaCl,
d) gegebenenfalls 0,1 Gewichts-%, vorzugsweise wenigstens 2 Gewichts-%, bevorzugter wenigstens 5 Gewichts-% und vorzugsweise höchstens 50 Gewichts-%, bevorzugter höchstens 25 Gewichts-%, am bevorzugtesten höchstens 10 Gewichts-% eines Aromatisierungsmittel, alle bezogen auf das Gewicht des Nahrungsmittelprodukts.

8. Nahrungsmittelprodukt nach Anspruch 6 oder 7, wobei sich das Proteinaggregat in der Öl-Wasser-Grenzfläche der Emulsion befindet.

9. Nahrungsmittelprodukt nach Anspruch 7 oder 8, wobei das Proteinprodukt wenigstens 50 % der Anzahl an Tröpfchen in der Emulsion wenigstens teilweise einkapselt.

10. Nahrungsmittelprodukt nach einem der vorangehenden Ansprüche 5 bis 9, wobei das Nahrungsmittelprodukt im Wesentlichen frei von Gummen ist.

11. Verfahren zur Herstellung eines Nahrungsmittelprodukts nach einem der vorangehenden Ansprüche, umfassend die Schritte:
a) In-Kontakt-Bringen des Proteinaggregats mit der wässrigen Phase;
b) gegebenenfalls Zusetzen eines oder mehrerer undenaturierter Proteine;
c) Emulgieren der Ölphase, der wässrigen Phase und des Proteinaggregats unter Bildung einer Emulsion;
d) gegebenenfalls Homogenisieren der erhaltenen Emulsion und
e) gegebenenfalls Zugeben von Aromatisierungsmitteln nach einem der vorherigen Schritte und
f) gegebenenfalls Erwärmen des Nahrungsmittelprodukts vorzugsweise unter Anwendung von Pasteurisierung, Sterilisierung, Ultrahochdruck oder einer Kombination davon.

12. Verfahren zum Stabilisieren eines Nahrungsmittelprodukts, umfassend Zugeben eines Proteinaggregats nach einem der vorangehenden Ansprüche zu einem Nahrungsmittelprodukt.

## Revendications

1. Procédé de préparation d'un agrégat protéique comprenant les étapes consistant à :
a) diminuer le pH d'une solution protéique aqueuse d'une ou plusieurs protéines non dénaturées à un pH de 5,0 ou inférieur, de préférence un pH de 4,5 ou inférieur, de manière davantage préférée un pH de 4,0 ou inférieur et de manière préférée entre toutes un pH de 3,6 ou inférieur ;
b) ajouter éventuellement plus de 0,01 % en poids d'un électrolyte ;
c) cisailler ladite solution,
moyennant quoi les étapes a à c sont réalisées à une température inférieure à 70 degrés C, de préférence inférieure à 60 degrés C, de manière davantage préférée inférieure à 40 degrés C, de manière préférée entre toutes inférieure à 30 degrés C ;
d) sécher éventuellement la solution protéique cisaillée pour former une poudre d'agrégat protéique.

2. Agrégat protéique pouvant être obtenu par un procédé selon la revendication 1, ledit agrégat protéique comprenant une multitude de particules protéiques dénaturées et au moins 50 % du nombre desdites particules protéiques ont dans un état hydraté un diamètre supérieur à 3 microns, de préférence supérieur à 5 microns, de manière davantage préférée supérieur à 7 microns et de préférence un diamètre inférieur à 35 microns, de manière davantage préférée inférieur à 30 microns, de manière préférée entre toutes inférieur à 25 microns et de préférence moins de 10 % du nombre desdites particules protéiques ont dans un état hydraté un diamètre supérieur à 300 microns et de préférence un diamètre supérieur à 200 microns, de manière davantage préférée supérieur à 50 microns.

3. Agrégat protéique selon la revendication 2, moyennant quoi l'agrégat protéique comprend plus d'une protéine.

4. Agrégat protéique selon la revendication 2 ou la revendication 3, moyennant quoi l'agrégat protéique comprend une protéine du blanc d'oeuf, une protéine du jaune d'oeuf ou une combinaison de celles-ci.

5. Produit alimentaire comprenant au moins 0,1 % en poids, de préférence au moins 2 % en poids, de manière davantage préférée au moins 5 % en poids et de préférence au plus 50 % en poids, de manière davantage préférée au plus 25 % en poids, de manière préférée entre toutes au plus 10 % en poids d'un agrégat protéique selon l'une quelconque des revendications précédentes du poids du produit alimentaire.

6. Produit alimentaire selon la revendication 5, moyennant quoi le produit alimentaire est une émulsion alimentaire comestible comprenant en outre
a) au moins 0,1 % en poids, de préférence au moins 2 % en poids, de manière davantage préférée au moins 20 % en poids et au plus 70 % en poids, de préférence au plus 60 % en poids, de manière préférée entre toutes au plus 50 % en poids d'une phase huileuse ;
b) au moins 0,1 % en poids, de préférence au moins 2 % en poids, de manière davantage préférée au moins 20 % en poids et de préférence au plus 99 % en poids, de manière davantage préférée au plus 90 % en poids, de manière préférée entre toutes au plus 80 % en poids d'une phase aqueuse ; et
c) éventuellement au moins 0,1 % en poids, de préférence au moins 2 % en poids, de manière davantage préférée au moins 5 % en poids et de préférence au plus 50 % en poids, de manière davantage préférée au plus 25 % en poids, de manière préférée entre toutes au plus 10 % en poids d'un agent aromatisant du poids du produit alimentaire.

7. Produit alimentaire selon la revendication 5, moyennant quoi le produit alimentaire est une sauce savoureuse comprenant en outre
a) au moins 0 % en poids, de préférence au moins 0,1 % en poids, de manière davantage préférée au moins 1 % en poids et au plus 30 % en poids, de préférence au plus 25 % en poids, de manière préférée entre toutes au plus 20 % en poids d'une phase huileuse ;
b) au moins 0,1 % en poids, de préférence au moins 2 % en poids, de manière davantage préférée au moins 20 % en poids et de préférence au plus 99 % en poids, de manière davantage préférée au plus 90 % en poids, de manière préférée entre toutes au plus 80 % en poids d'une phase aqueuse ; et
c) au moins 0,1 % en poids de NaCl
d) éventuellement au moins 0,1 % en poids, de préférence au moins 2 % en poids, de manière davantage préférée au moins 5 % en poids et de préférence au plus 50 % en poids, de manière davantage préférée au plus 25 % en poids, de manière préférée entre toutes au plus 10 % en poids d'un agent aromatisant, tous par poids du produit alimentaire.

8. Produit alimentaire selon les revendications 6 ou 7, moyennant quoi l'agrégat protéique est localisé dans l'interface huile eau de l'émulsion.

9. Produit alimentaire selon la revendication 7 ou 8, moyennant quoi ledit agrégat protéique encapsule au moins partiellement au moins 50 % du nombre de gouttelettes dans l'émulsion.

10. Produit alimentaire selon l'une quelconque des revendications précédentes 5 à 9, où le produit alimentaire est pratiquement dépourvu de gommes.

11. Procédé de préparation de produit alimentaire selon l'une quelconque des revendications précédentes comprenant les étapes consistant à
a) mettre en contact l'agrégat protéique avec la phase aqueuse ;
b) ajouter éventuellement une ou plusieurs protéines non dénaturées ;
c) émulsifier la phase huileuse, la phase aqueuse et l'agrégat protéique pour former une émulsion ;
d) homogénéiser éventuellement l'émulsion obtenue ; et
e) ajouter éventuellement des agents aromatisants après l'une quelconque des étapes précédentes ; et
f) chauffer éventuellement le produit alimentaire en utilisant de préférence la pasteurisation, la stérilisation, la pression ultra-élevée ou une combinaison de celles-ci.

12. Procédé de stabilisation d'un produit alimentaire comprenant l'addition d'un agrégat protéique selon l'une quelconque des revendications précédentes à un produit alimentaire.
